# EUROPEAN PATENT APPLICATION

(11) **EP 2 434 332 A1**
(43) Date of publication of application: **28.03.2012**
(21) Application number: 10793882.1
(22) Date of filing: 05.03.2010
(51) Int. Cl.: G02F 1/1333, G02F 1/13357

(54) **LIQUID CRYSTAL DISPLAY APPARATUS**

(30) Priority: 02.07.2009 JP 2009157778
(71) Applicant: Sharp Kabushiki Kaisha, Osaka-shi, Osaka 545-8522 (JP)
(72) Inventor: HAMADA, Tetsuya, Osaka 545-8522 (JP)
(74) Representative: Müller-Boré & Partner Patentanwälte
(86) International application number: PCT/JP2010/053634
(87) International publication number: WO 2011/001711

(57) **Abstract**

In a liquid crystal display apparatus (1) comprising: a liquid crystal panel (2); an illuminating device (3) for irradiating the liquid crystal panel (2) with illumination light; and an outer casing for accommodating the liquid crystal panel (2) and the illuminating device (3), the outer casing includes a bezel (4) provided on the liquid crystal panel (2) side and a frame (frame member) (5) configured so as to be contained within the bezel (4) and having side walls (5b) to which a mounting board (9) on which light-emitting diodes (8) are mounted is attached. A protruding portion (thermally conductive portion) (14) for transferring heat generated by the light-emitting diodes (8) from the frame (5) side to the bezel (4) side is provided between the side surface (4b) of the bezel (4) and the side wall (5b) of the frame (5).

## Description

### Technical Field

The present invention relates to a liquid crystal display apparatus in which a liquid crystal panel and an illuminating device are combined into one piece and particularly to a liquid crystal display apparatus having an illuminating device that uses light-emitting diodes as a light source.

### Background Art

In recent years, liquid crystal display apparatuses have been used widely in liquid crystal display televisions, monitors, mobile phones, etc. as flat panel displays having advantages over conventional cathode-ray tubes such as being thin and lightweight. Such a liquid crystal display apparatus includes an illuminating device for emitting light and a liquid crystal panel for displaying desired images by functioning as a shutter against light from a light source included in the illuminating device.

The illuminating device has been provided as an edge light type or direct light type in which a linear light source composed of cold-cathode fluorescent tubes or hot-cathode fluorescent tubes is located on the side or underside of the liquid crystal panel. However, the cold-cathode fluorescent tubes etc. contain mercury and have not been easily recyclable when they are discarded. Therefore, illuminating devices using mercury-free light-emitting diodes (LEDs) as a light source have been developed and put to practical use.

Generally, in the illuminating devices as described above, white light is achieved by using a white light-emitting diode or by providing three colors of light-emitting diodes, red (R), green (G) and blue (B), that emit the respective colors of lights and mixing the three colors of light and the light is emitted to the liquid crystal panel as illumination light.

However, the light-emitting diodes as described above are likely to have a short life when the ambient temperature is high.

For this reason, in a conventional liquid crystal display apparatus as the one described in Patent document 1 listed below, for example, a metal film pattern is formed on a mounting board on which light-emitting diodes are mounted so as to surround the light-emitting diodes and driving metal wiring for supplying a driving current to the light-emitting diodes on the mounting surface side of the mounting board. Further, in this conventional liquid crystal display apparatus, a metal film for radiating heat is formed on the backside of the mounting surface of the mounting board and the metal film pattern and the metal film for radiating heat are connected to each other via metal through holes. Further, in this conventional liquid crystal display apparatus, a metal reflector provided below the light guide plate is extended so as to bring the metal reflector into surface contact with the metal film for radiating heat. And in this conventional liquid crystal display apparatus, an increase in the longevity of the light-emitting diodes can be presumably achieved by transferring heat generated by the light-emitting diodes to the metal reflector to reduce the ambient temperature of the light-emitting diodes.

### Prior art document

### Patent document

Patent Document 1: JP 2005-283852 A

### Disclosure of Invention

### Problem to be Solved by the Invention

However, the conventional liquid crystal display apparatus as described above may not be able to adequately radiate the heat generated by the light-emitting diodes, so that a reduction in the life of the light-emitting diodes may not be prevented.

To be more specific, in the conventional liquid crystal display apparatus, the backside of the mounting board on which the light-emitting diodes are mounted is brought into surface contact with the metal reflector. However, since the metal reflector is generally composed of a very thin metal plate (e.g., a metal plate of 0.2 mm or less), the heat radiation achieved by the metal reflector may become inadequate depending on the type and number of the light-emitting diodes, so that the ambient temperature of the light-emitting diodes may not be reduced appropriately. As a result, the conventional liquid crystal display apparatus may not be able to prevent a reduction in the life of the light-emitting diodes resulting from a temperature increase.

For example, a heat sink dedicated to radiating the heat generated by the light-emitting diodes or forced-air cooling structure such as a cooling fan could be provided as a radiating component. However, this leads to another problem: a significant increase in the cost of the liquid crystal display apparatus.

With the foregoing in mind, it is an object of the present invention to provide a low-cost liquid crystal display apparatus that can prevent a reduction in the life of light-emitting diodes resulting from a temperature increase with certainty.

### Means for Solving Problem

In order to achieve the object described above, the liquid crystal display apparatus according to the present invention is a liquid crystal display apparatus comprising: a liquid crystal panel; an illuminating device for irradiating the liquid crystal panel with illumination light; and an outer casing for accommodating the liquid crystal panel and the illuminating device. The illuminating device includes: light-emitting diodes; a mounting board on which the light-emitting diodes are mounted; a light guide plate having an incident surface upon which the light from the light-emitting diodes is incident and a light-emitting surface from which the light incident upon the incident surface is emitted, the light guide plate guiding the light incident upon the incident surface in a predetermined propagation direction so that the light is emitted from the light-emitting surface toward the liquid crystal panel. The outer casing includes: a bezel having a frame-shaped frame body provided around a display surface of the liquid crystal panel and a plurality of side surfaces provided around the frame body; and a frame member configured so as to be contained within the bezel and having a bottom surface and a plurality of side walls provided around the bottom surface. The mounting board is attached to at least one of the side walls of the frame member such that the light-emitting diodes oppose the incident surface of the light guide plate. A thermally conductive portion for transferring heat generated by the light-emitting diodes from the frame member side to the bezel side is provided between the side surface of the bezel and the side wall of the frame member.

The liquid crystal display apparatus configured as above includes, as the outer casing, the bezel provided on the liquid crystal panel side and the frame member provided on the illuminating device side. Further, the thermally conductive portion for transferring heat generated by the light-emitting diodes from the frame member side to the bezel side is provided between the side surface of the bezel and the side wall of the frame member. As a result, while curving an increase in the cost of the liquid crystal display apparatus, the heat generated by the light-emitting diodes can be efficiently transferred to the bezel provided on the liquid crystal panel side and the area used for radiating the heat generated by the light-emitting diodes can be increased with ease. Consequently, unlike the conventional example described above, it is possible to configure a low-cost liquid crystal display apparatus that can prevent a reduction in the life of the light-emitting diodes resulting from a temperature increase with certainty.

In the liquid crystal display apparatus described above, it is preferable that the thermally conductive portion is provided between the side wall to which the mounting board is attached and the side surface of the bezel opposing the side wall.

In this case, the heat generated by the light-emitting diodes can be efficiently transferred to the bezel side and a reduction in the life of the light-emitting diodes resulting from a temperature increase can be prevented with more certainty.

Further, in the liquid crystal display apparatus described above, a protruding portion protruded toward the side wall of the frame member so as to come into contact with the side wall may be used on the side surface of the bezel as the thermally conductive portion.

In this case, the heat generated by the light-emitting diodes is transferred from the frame member side to the bezel side through the protruding portion.

Further, in the liquid crystal display apparatus described above, a thermally conductive member disposed between the side surface of the bezel and the side wall of the frame member may be used as the thermally conductive portion.

In this case, the heat generated by the light-emitting diodes is transferred from the frame member side to the bezel side through the thermally conductive member.

Further, in the liquid crystal display apparatus described above, it is preferable that the light-emitting diodes are aligned on the mounting board, the bezel and the frame member are configured such that a lug formed on the side surface of the bezel is fitted into a hole formed in the side wall of the frame member opposing the side surface, and the hole is formed in the side wall of the frame member to which the mounting board is attached such that the hole is disposed between two of the light-emitting diodes that are adjacent to each other.

In this case, the hole is formed in the side wall of the frame member to which the mounting board is attached such that the hole is disposed between two adjacent light-emitting diodes. Thus, it is possible to prevent a decline in the thermal conductivity when transferring the heat generated by the light-emitting diodes from the frame member side to the bezel side.

Further, in the liquid crystal display apparatus described above, the mounting board may be attached to the side wall of the frame member with thermally conductive double-sided tape.

In this case, the attachment of the mounting board to the side wall of the frame member can be simplified with ease.

### Effects of the Invention

According to the present invention, it is possible to provide a low-cost liquid crystal display apparatus that can prevent a reduction in the life of light-emitting diodes resulting from a temperature increase with certainty.

### Brief description of the drawings

[FIG. 1] FIG. 1 is an exploded perspective view for explaining the configuration of a liquid crystal display apparatus according to Embodiment 1 of the present invention.
[FIG. 2] FIG. 2 is a plan view for explaining the main configuration of the liquid crystal display apparatus.
[FIG. 3] FIG. 3 is a cross-sectional view for explaining the main configuration of the liquid crystal display apparatus.
[FIG. 4] FIG. 4 is a perspective view for explaining the main configuration of the bezel shown in FIG. 1.
[FIG. 5] FIG. 5 is a plan view for explaining the main configuration of a liquid crystal display apparatus according to Embodiment 2 of the present invention.
[FIG. 6] FIGS. 6(a) and 6(b) are a perspective view and a plan view for explaining the main configuration of the bezel shown in FIG. 5, respectively FIGS. 6(c) and 6(d) are cross-sectional views taken along the line VIc-VIc and the line VId-VId in FIG. 6(b), respectively.
[FIG. 7] FIG. 7 is a plan view for explaining the main configuration of a liquid crystal display apparatus according to Embodiment 3 of the present invention.
[FIG. 8] FIG. 8 is a cross-sectional view for explaining the main configuration of the liquid crystal display apparatus shown in FIG. 7.

### Description of the Invention

Hereinafter, preferred embodiments of the liquid crystal display apparatus of the present invention will be described with reference to the drawings. In the following descriptions, the present invention is applied to a transmission-type liquid crystal display apparatus by way of example. The size and size ratio of each of the constituent members in the drawings do not exactly reflect those of the actual constituent members.

### [Embodiment 1]

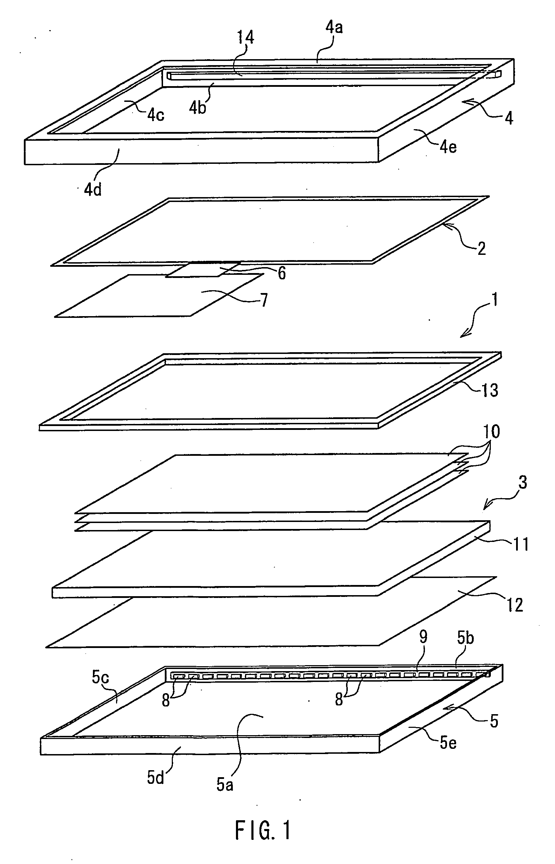

FIG. 1 is an exploded perspective view for explaining the configuration of a liquid crystal display apparatus according to Embodiment 1 of the present invention. In FIG. 1, the liquid crystal display apparatus 1 of the present embodiment includes a liquid crystal panel 2 as a display portion for displaying information and an illuminating device 3 for irradiating the liquid crystal panel 2 with illumination light. The liquid crystal panel 2 and the illuminating device 3 are combined into the transmission-type liquid crystal display apparatus 1. That is, the liquid crystal display apparatus 1 includes, as an outer casing for accommodating the liquid crystal panel 2 and the illuminating device 3, a bezel 4 provided on the liquid crystal panel 2 side and a frame 5 provided on the illuminating device 3 side. The constituent members of the liquid crystal display apparatus 1 shown in FIG. 1 are stacked together and are accommodated between the bezel 4 and the frame 5.

The bezel 4 includes a frame-shaped frame body 4a provided around the display surface of the liquid crystal panel 2 and four side surfaces 4b, 4c, 4d and 4e provided around the frame body 4a. The frame body 4a is configured so that the display surface of the liquid crystal panel 2 can be visually recognized and the frame body 4a defines an opening (described later). Further, as will be described later in detail, a protruding portion 14 as a thermally conductive portion is formed on the side surface 4b of the bezel 4.

The frame 5 is a frame member that has a bottom and is configured so as to be contained within the bezel 4. The frame 5 includes a bottom surface 5a that constitutes the bottom of the outer casing. Further, the frame 5 includes 4 side walls 5b, 5c, 5b and 5e provided around the bottom surface 5a. When the bezel 4 and the frame 5 are combined into the outer casing, the side walls 5b to 5e are disposed within the bezel 4 so as to oppose the side surfaces 4b to 4e, respectively. Further, a mounting board 9 on which a plurality of light-emitting diodes 8 (e.g., 22 light-emitting diodes) are mounted in line is fixed to the side wall 5b of the frame 5, and heat generated by the light-emitting diodes 8 is transferred to the bezel 4 side through the protruding portion 14 (described later in detail).

The liquid crystal panel 2 includes an active matrix substrate, a counter substrate and a liquid crystal layer sandwiched between these substrates, and the display surface of the liquid crystal panel 2 includes a plurality of pixels (not shown). Further, a printed circuit board 7 is connected to the liquid crystal panel 2 through a flexible printed circuit board 6. On the printed circuit board 7, a source driver and a gate driver (both of which are not shown) are provided, for example. Thus, in the liquid crystal panel 2, the source driver and the gate driver drive the liquid crystal layer pixel by pixel. Further, a frame-shaped plastic frame 13 is disposed around the outer rim of the liquid crystal panel 2, so that the plastic frame 13 allows the liquid crystal panel 2 to be attached to the outer casing at a predetermined position within the outer casing.

The illuminating device 3 includes optical sheets 10 as well as a light guide plate 11 and a reflective sheet 12 provided under the optical sheets 10 in order. The optical sheets 10 include a polarization sheet, a prism (collecting) sheet and/or a diffusion sheet. The optical sheets 10 increase the brightness of the illumination light as needed to improve the display performance of the liquid crystal panel 2. The light guide plate 11 is disposed so as to oppose the light-emitting diodes 8. The light from the light-emitting diodes 8 is incident upon the light guide plate 11 and is emitted toward the liquid crystal panel 2 (described later in detail). The reflective sheet 12 is attached to the bottom surface 5a of the frame 5 and reflects the light from the light-emitting diodes 8 toward the liquid crystal panel 2.

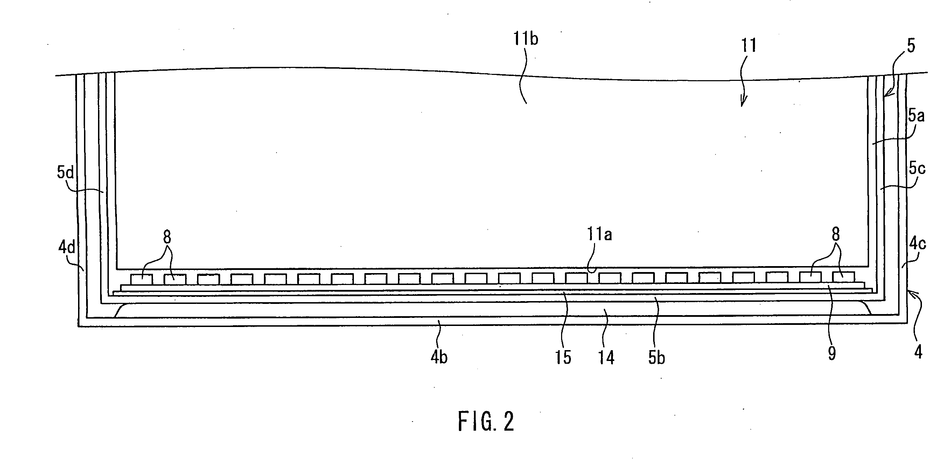

Hereinafter, the main configuration of the liquid crystal display apparatus 1 of the present embodiment will be described in detail also with reference to FIGS. 2 to 4.

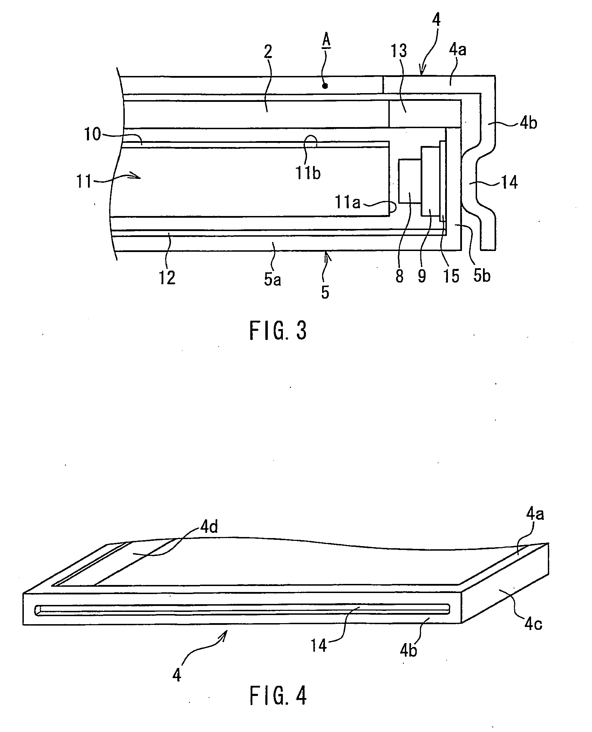

FIG. 2 is a plan view for explaining the main configuration of the liquid crystal display apparatus. FIG. 3 is a cross-sectional view for explaining the main configuration of the liquid crystal display apparatus. FIG. 4 is a perspective view for explaining the main configuration of the bezel shown in FIG. 1.

As shown in FIGS. 2 and 3, when the bezel 4 and the frame 5 are combined into one piece, the protruding portion 14 formed on the side surface 4b of the bezel 4 comes into contact with the side wall 5b of the frame 5. To be more specific, the mounting board 9 on which the light-emitting diodes 8 are mounted is attached to the inner surface of the side wall 5b of the frame 5 with thermally conductive double-sided tape 15 as double-sided tape having thermal conductivity.

A plurality of the light-emitting diodes 8 (e.g., 22 light-emitting diodes) are aligned and are mounted on the mounting surface of the mounting board 9. The mounting board 9 is attached to the inner surface of the side wall 5b of the frame 5 through the thermally conductive double-sided tape 15. For example, a 3-in-1 type light-emitting diode in which red (R), green (G) and blue (B) light-emitting diodes are combined into one piece is used for each light-emitting diode 8, and each light-emitting diode 8 is disposed so as to oppose an incident surface 11a of the light guide plate 11.

Further, the light guide plate 11 has a light-emitting surface 11b from which light incident upon the incident surface 11a from the light-emitting diodes 8 is emitted. The light guide plate 11 guides the light incident upon the incident surface 11a from the light-emitting diodes 8 in a predetermined propagation direction (left direction in FIG. 2) and emits the light from the light-emitting surface 11b toward the liquid crystal panel 2. As shown in FIG. 3, the liquid crystal panel 2 is disposed by means of the plastic frame 13 such that it is positioned at a predetermined height from the optical sheets 10. Moreover, the liquid crystal panel 2 is disposed such that the display surface of the liquid crystal panel 2 comes below the opening A surrounded by the frame body 4a of the bezel 4 in order for the display surface to be visually recognizable.

Also with reference to FIG. 4, formed on the side surface 4b of the bezel 4 is the protruding portion 14 that protrudes toward the side wall 5b of the frame 5 so as to come into contact with the side wall 5b. The protruding portion 14 is formed by drawing, for example, and constitutes the thermally conductive portion for transferring heat generated by the light-emitting diodes 8 from the frame 5 side to the bezel 4 side. And when the bezel 4 and the frame 5 are combined into one piece, the protruding portion 14 comes into contact with the outer surface of the side wall 5b of the frame 5. As a result, heat generated by the light-emitting diodes 8 is transferred to the bezel 4 side through the mounting board 9, the thermally conductive double-sided tape 15, the side wall 5b of the frame 5 and the protruding portion 14.

The liquid crystal display apparatus 1 of the present embodiment configured as above includes, as the outer casing, the bezel 4 provided on the liquid crystal panel 2 side and the frame (frame member) 5 provide on the illuminating device 3 side. Further, the protruding portion 14 is provided between the side surface 4b of the bezel 4 and the side wall 5b of the frame 5 as the thermally conductive portion for transferring heat generated by the light-emitting diodes 8 from the frame 5 side to the bezel 4 side. As a result, in the present embodiment, while curving an increase in the cost of the liquid crystal display apparatus 1, heat generated by the light-emitting diodes 8 can be efficiently transferred to the bezel 4 provided on the liquid crystal panel 2 side and the area used for radiating the heat generated by the light-emitting diodes 8 can be increased with ease. Consequently, unlike the conventional example described above, it is possible to configure, in the present embodiment, the low-cost liquid crystal display apparatus 1 that can prevent a reduction in the life of the light-emitting diodes 8 resulting from a temperature increase with certainty.

### [Embodiment 2]

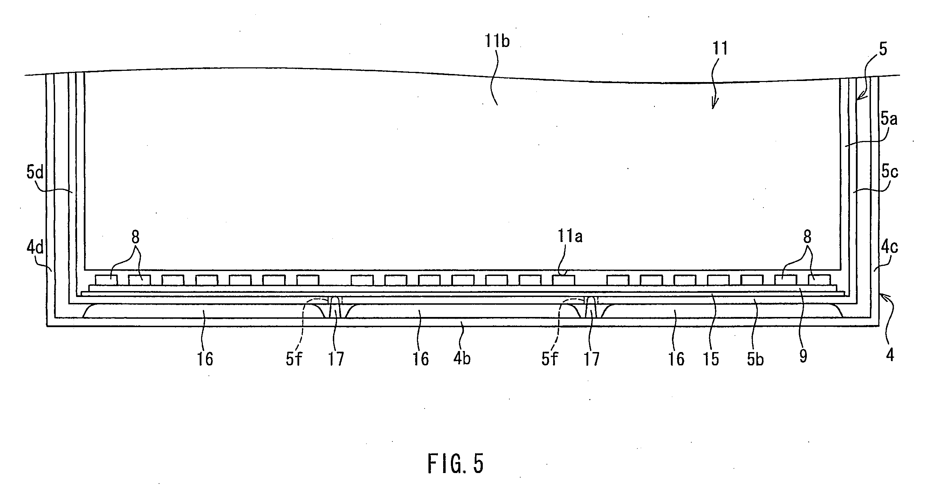

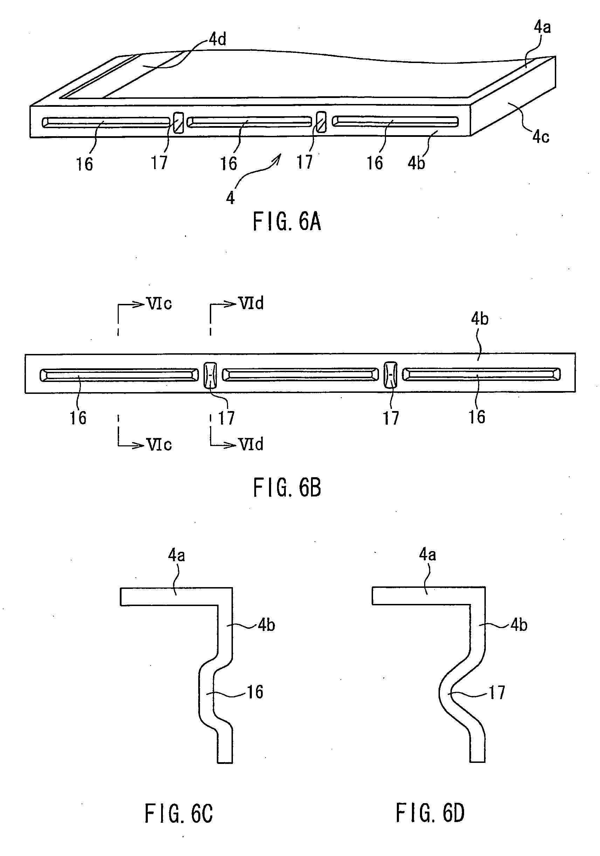

FIG. 5 is a plan view for explaining the main configuration of a liquid crystal display apparatus according to Embodiment 2 of the present invention. FIGS. 6(a) and 6(b) are a perspective view and a plan view for explaining the main configuration of the bezel shown in FIG. 5, respectively. FIGS. 6(c) and 6(d) are cross-sectional views taken along the line VIc-VIc and the line VId-VId in FIG. 6(b), respectively. In the drawings, the primary difference between the present embodiment and Embodiment 1 is that in the present embodiment lugs are formed on one side surface of the bezel and holes are formed in the side wall of the frame opposing the side surface and the lugs are fitted into the holes. Note that the same elements as in Embodiment 1 are denoted by the same reference numerals and the description thereof will not be repeated.

That is, as shown in FIG. 5 and FIGS. 6(a) to 6(d), in the liquid crystal display apparatus 1 of the present embodiment, a plurality of the light-emitting diodes 8 (e.g., 21 light-emitting diodes) are aligned and are mounted on the mounting surface of the mounting board 9. Further, formed on the side surface 4b of the bezel 4 are three protruding portions 16 provided in line and two lugs 17 each provide between two adjacent protruding portions 16. Similarly to the protruding portion in Embodiment 1, each protruding portion 16 constitutes the thermally conductive portion for transferring heat generated by the light-emitting diodes 8 from the frame 5 side to the bezel 4 side. Namely, each protruding portion 16 is formed by drawing, for example, and protrudes toward the side wall 5b of the frame 5 so as to come into contact with the side wall 5b.

Further, similarly to each protruding portion 16, each lug 17 is formed by drawing, for example. However, as shown in FIG. 6(d), each lug 17 is formed so that it protrudes more toward the side wall 5b than the protruding portion 16 shown in FIG. 6(c). And each lug 17 is fitted into the hole 5f (FIG. 5) formed in the side wall 5b of the frame 5 to which the mounting board 9 is attached. In other words, in the liquid crystal display apparatus 1 of the present embodiment, when the bezel 4 and the frame 5 are combined into one piece, the lugs 17 are fitted into the holes 5f.

Further, each hole 5f is formed in the side wall 5b to which the mounting board 9 is attached such that each hole 5f is disposed between two adjacent light-emitting diodes 8.

Due to the above configuration, the present embodiment can provide the same effects as Embodiment 1. In other words, in the liquid crystal display apparatus 1 of the present embodiment, the protruding portions 16 as the thermally conductive portions are formed on the side surface 4b of the bezel 4 so as to come into contact with the side wall 5b of the frame 5. Therefore, it is possible to transfer heat generated by the light-emitting diodes 8 from the frame 5 side to the bezel 4 side through the protruding portions 16. Further, in the liquid crystal display apparatus 1 of the present embodiment, the holes 5f are formed in the side wall 5b of the frame 5 to which the mounting board 9 is attached such that each hole 5f is disposed between two adjacent light-emitting diodes 8. Consequently, it is possible to prevent a decline in the thermal conductivity when transferring the heat generated by the light-emitting diodes 8 from the frame 5 side to the bezel 4 side.

### [Embodiment 3]

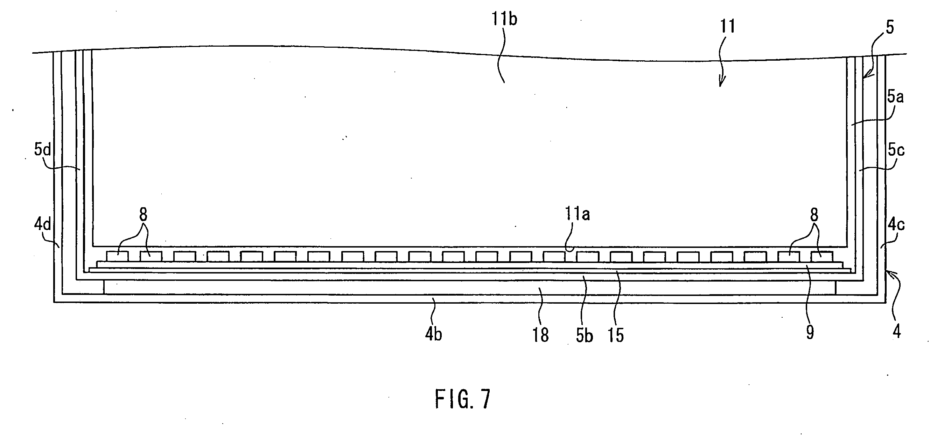

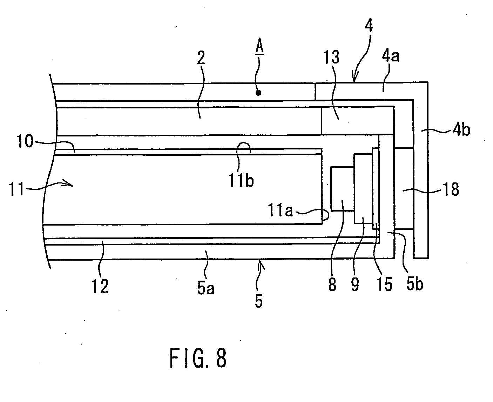

FIG. 7 is a plan view for explaining the main configuration of a liquid crystal display apparatus according to Embodiment 3 of the present invention. FIG. 8 is a cross-sectional view for explaining the main configuration of the liquid crystal display apparatus shown in FIG. 7. In the drawings, the primary difference between the present embodiment and Embodiment 1 is that a thermally conductive member is used in the present embodiment as the thermally conductive portion. Note that the same elements as in Embodiment 1 are denoted by the same reference numerals and the description thereof will not be repeated.

That is, as shown in FIGS. 7 and 8, in the liquid crystal display apparatus 1 of the present embodiment, the thermally conductive member 18 is disposed between the side surface 4b of the bezel 4 and the side wall 5b of the frame 5. For the thermally conductive member 18, a thermally conductive sheet or thermally conductive double-sided tape having thermal conductivity is used, for example. The thermally conductive member 18 constitutes the thermally conductive portion for transferring heat generated by the light-emitting diodes 8 from the frame 5 side to the bezel 4 side.

Due to the above configuration, the present embodiment can provide the same effects as Embodiment 1. In other words, in the liquid crystal display apparatus 1 of the present embodiment, the thermally conductive member 18 disposed between the side surface 4b of the bezel 4 and the side wall 5b of the frame 5 is used as the thermally conductive portion. As a result, it is possible to transfer heat generated by the light-emitting diodes 8 from the frame 5 side to the bezel 4 side through the thermally conductive portion 18.

Note that all of the embodiments described above are shown merely for an illustrative purpose and are not limiting. The technical scope of the present invention is defined by the claims, and all the changes within a range equivalent to the configuration recited in the claims also are included in the technical scope of the present invention.

For example, the descriptions given above have been directed to the case where the present invention is applied to a transmission type liquid crystal display apparatus. However, the application of the liquid crystal display apparatus of the present invention is not limited this and the present invention can also be applied to, for example, a semi-transmission type liquid crystal display apparatus.

Further, the descriptions given above have been directed to the case where the protruding portions or thermally conductive member as the thermally conductive portion is provided between the side wall of the frame (frame member) to which the mounting board is attached and the side surface of the bezel opposing the side wall. However, the thermally conductive portion of the present invention can be provided at any place, in any number and shape, for example, as long as it is provided between the side surface of the bezel and the side wall of the frame member and transfers heat generated by the light-emitting diodes from the frame member side to the bezel side. Thus, the thermally conductive portion may be provided, for example, between the side wall of the frame member to which the mounting board is not attached and the side surface of the bezel opposing the side wall.

However, as described in each of the embodiments above, it is more preferable to provide the thermally conductive portion between the side wall of the frame member to which the mounting board is attached and the side surface of the bezel opposing the side wall because heat generated by the light-emitting diodes can be efficiently transferred to the bezel side and a reduction in the life of the light-emitting diodes resulting from a temperature increase can be prevented with more certainty.

Further, the descriptions given above have been directed to the case where the bezel having four side surfaces and the frame (frame member) having four side walls are used. However, the bezel and the frame member of the present invention are not limited to these configurations as long as the bezel has a plurality of side surfaces (e.g., two side surfaces) and the frame member has a plurality of side walls (e.g., two side walls).

Further, the descriptions given above have been directed to the case where the mounting board on which the light-emitting diodes are mounted is attached to one of the four side walls of the frame (frame member). However, the mounting board of the present invention is not limited this configuration as long as it can be attached to at least one of the side walls of the frame member such that the light-emitting diodes oppose the incident surface of the light guide plate.

Further, although the descriptions given above have been directed to the case where the mounting board is attached to one side wall of the frame (frame member) with the thermally conductive double-sided tape (double-sided tape having thermal conductivity), the present invention is not limited this configuration. For example, the mounting board may be attached to the side wall of the frame member with screws while interposing the thermally conductive sheet between the mounting board and the side wall.

However, as described in each of the embodiments above, it is more preferable to use the thermally conductive double-sided tape than to use screws and the like because the attachment of the mounting board to the side wall of the frame member can be simplified with ease.

Further, the descriptions given above have been directed to the case of using 3-in-1 type light-emitting diodes each composed of R, G, and B light-emitting diodes. However, the present invention is not particularly limited as long as a plurality of colors of light-emitting diodes that emit a plurality of colored lights that can be mixed into white light are used. Specifically, so-called 4-in-1 type light-emitting diodes each composed of R, G, B and W light-emitting diodes can be applied to or two kinds of light-emitting diodes that emit yellow light and blue light, respectively, can be used in the present invention. Further, three light-emitting diodes that are composed separately of R,G and B light-emitting diodes can also be used.

In addition to the above, Embodiments 1 to 3 may be combined as needed.

### Industrial Applicability

The present invention is useful in a low-cost liquid crystal display apparatus that can prevent a reduction in the life of light-emitting diodes resulting from a temperature increase with certainty

### Description of Reference Numerals

- 1: liquid crystal display apparatus
- 2: liquid crystal panel
- 3: illuminating device
- 4: bezel (outer casing)
- 4a: frame body
- 4b-4e: side surface
- 5: frame (outer casing, frame member)
- 5a: bottom surface
- 5b-5e: side wall
- 5f: hole
- 8: light-emitting diode
- 9: mounting board
- 11: light guide plate
- 11a: incident surface
- 11b: light-emitting surface
- 14, 16: protruding portion (thermally conductive portion)
- 15: thermally conductive double-sided tape
- 17: lug
- 18: thermally conductive member (thermally conductive portion)

## Claims

1. A liquid crystal display apparatus comprising:
a liquid crystal panel;
an illuminating device for irradiating the liquid crystal panel with illumination light; and
an outer casing for accommodating the liquid crystal panel and the illuminating device,
wherein the illuminating device includes: light-emitting diodes; a mounting board on which the light-emitting diodes are mounted; a light guide plate having an incident surface upon which the light from the light-emitting diodes is incident and a light-emitting surface from which the light incident upon the incident surface is emitted, the light guide plate guiding the light incident upon the incident surface in a predetermined propagation direction so that the light is emitted from the light-emitting surface toward the liquid crystal panel,
the outer casing includes: a bezel having a frame-shaped frame body provided around a display surface of the liquid crystal panel and a plurality of side surfaces provided around the frame body; and a frame member configured so as to be contained within the bezel and having a bottom surface and a plurality of side walls provided around the bottom surface,
the mounting board is attached to at least one of the side walls of the frame member such that the light-emitting diodes oppose the incident surface of the light guide plate, and
a thermally conductive portion for transferring heat generated by the light-emitting diodes from the frame member side to the bezel side is provided between the side surface of the bezel and the side wall of the frame member.

2. The liquid crystal display apparatus according to claim 1, wherein the thermally conductive portion is provided between the side wall to which the mounting board is attached and the side surface of the bezel opposing the side wall.

3. The liquid crystal display apparatus according to claim 1 or 2, wherein a protruding portion protruded toward the side wall of the frame member so as to come into contact with the side wall is used on the side surface of the bezel as the thermally conductive portion.

4. The liquid crystal display apparatus according to any one of claims 1 to 3, wherein a thermally conductive member disposed between the side surface of the bezel and the side wall of the frame member is used as the thermally conductive portion.

5. The liquid crystal display apparatus according to any one of claims 1 to 4, wherein the light-emitting diodes are aligned on the mounting board,
the bezel and the frame member are configured such that a lug formed on the side surface of the bezel is fitted into a hole formed in the side wall of the frame member opposing the side surface, and
the hole is formed in the side wall of the frame member to which the mounting board is attached such that the hole is disposed between two of the light-emitting diodes that are adjacent to each other.

6. The liquid crystal display apparatus according to any one of claims 1 to 5, wherein the mounting board is attached to the side wall of the frame member with thermally conductive double-sided tape.
